# EUROPEAN PATENT APPLICATION

(11) **EP 3 185 202 A1**
(43) Date of publication of application: **28.06.2017**
(21) Application number: 15202217.4
(22) Date of filing: 22.12.2015
(51) Int. Cl.: G06Q 50/00, H04L 29/08

(54) **PROCESSING OF STATUS DATA IN AN ELECTRONIC DEVICE**

(71) Applicant: Orange, 75015 Paris (FR)
(72) Inventor: WIECHNO, Piotr, 04-088 Warszawa (PL); SUJECKA, Sabina, 02-691 Warszawa (PL)
(74) Representative: Cabinet Plasseraud

(57) **Abstract**

The invention relates to a method of processing status data captured from an electronic device, to a remote server, the electronic device comprising a button actionable to switch between at least a first state and a second state, said first and second states being associated with respective status tags in a database of the electronic device, the method comprising the following steps carried out by the electronic device:
- upon capturing (201) status data, checking (202) a current state of the actionable button;
- retrieving (203) a status tag from the database, based on the current state of the actionable button; and
- sending (204) the captured status data associated with the retrieved status tag to the remote server.

## Description

The present invention generally relates to the privacy of data issued from electronic devices, such as connected objects for example.

It finds applications in connected objects of any type, such as coffee machines, weather stations, temperature sensors, presence sensors, smartwatches, etc.

It is meant by *"connected object*" any object able to perform a given function, according to optional parameters, and comprising a network interface to report status data to a remote server, via an access point (through a network such as the internet for example).

When the status data is reported to the remote server, it is generally stored and made accessible to other entities of the network. For example, the user can consult the reported status data via an application installed on a mobile terminal, such as a Smartphone. To this end, the application accesses a service platform which can access to the remote server to retrieve the status data.

The status data can also be made available to third party servers.

The user can access the remote server via the application on his mobile terminal to modify settings, such as privacy settings.

For example, the user may define the privacy setting so that the status data issued by a first electronic device (a coffee machine for example) can be shared with any third party server or can be published on a timeline of a social network, and that the status data issued by a second electronic device (a smartwatch, which status data are more private) are not to be shared with third party servers nor published on the timeline.

When the user wants to change the settings of a given electronic device, he/she has to access a mobile network with his mobile terminal, then launch the application, access the remote server, enter a settings menu and change the settings that are related to the given electronic device, which is time consuming and complicated for the user.

There is therefore a need to accelerate and simplify the privacy settings for status data issued by electronic devices and reported to a remote server.

To address this need, a first aspect of the invention concerns a method of processing status data captured from an electronic device, that is to be sent to a remote server, the electronic device comprising a button actionable to switch between at least a first state and a second state, the first and second states being associated with respective status tags in a database of the electronic device, the method comprising the following steps carried out by the electronic device:
- upon capturing status data, checking a current state of the actionable button;
- retrieving a status tag from the database, based on the current state of the actionable button; and
- sending the captured status data associated with the retrieved status tag to the remote server.

Therefore, by means of an actionable button on the electronic device, the user can differentiate between several privacy levels. The server receiving the captured status data can then apply differentiated policies based on the status tag. The user is therefore not requested to access the remote server so as to define privacy parameters to be associated with the status data that are retrieved from his/her electronic devices.

This also simplifies the operation of the electronic device also as it systematically sends the status data to the server, without the need to filter them.

According to some embodiments of the invention the method may further comprise the following steps, carried out by the remote server:
- upon receiving the captured status data and the associated retrieved status tag, setting privacy parameters of the captured status data based on the associated retrieved status tag;
- managing accessibility of the captured status data based on the privacy parameters.

Therefore, the server may set privacy parameters and manage accessibility of the captured status data without the need for the user to manually choose or set the privacy parameters. The user however has the control of the privacy parameters as he can switch the actionable button.

In complement, the method may further comprise storing, by the remote server, the captured status data in association with an identifier of the electronic device.

Still in complement, managing accessibility of the captured data comprises, upon receiving of an access request by a third party server, the access request requesting access to the status data associated with the identifier of the electronic device, restricting the access to the status data based on the privacy parameters.

Therefore, switching the actionable button enables for the user to determine how third party servers can access the status data of his/her electronic devices.

In complement, the status tags may comprise at least a private mode tag and a sharing mode tag and restricting the access to the status data may comprise:
- enabling at least one third party server to access the captured status data or publishing the captured status data on a user timeline, if the associated status tag is the sharing mode tag;
- preventing, for at least one third party server, the access to the captured status data by if the associated status tag is the private mode tag.

Therefore, the options on the user side (electronic device) may be restricted to two, which enable to rapidly select a privacy level.

Still in complement, preventing the access to the captured status data comprises deleting the captured status data from the server.

This enables to ensure a maximum level of privacy as sensitive status data can be stored only in a local database of the user.

According to some embodiments of the invention, the privacy parameters of the captured status data are configurable by a user.

This enables to improve the configurability of the privacy parameters by the user.

In some embodiments, the captured status data of the electronic device can be further stored in association with a user identifier, and, upon subsequent reception of new status data from another electronic device associated with the user identifier, privacy parameters of the new status data are set based on the previously retrieved status tag.

This enables the user to have only one electronic device comprising an actionable button, and to use this electronic device as a master device for setting the privacy parameters of all the other electronic devices of the user.

A second aspect of the invention concerns a computer program product comprising a computer readable medium having stored thereon computer program instructions loadable into a computing device and adapted to - when loaded into and executed by said computing device - cause the computing device to perform a method according to the first aspect of the invention.

A third aspect of the invention concerns an electronic device comprising:
- a button actionable to switch between at least a first state and a second state;
- a database associating the first and second states with respective status tags, the tags defined respective levels of privacy;
- a processor configured for:
   - capturing status data;
   - upon capturing status data, checking a current state of the actionable button;
   - retrieving a status tag from the database based on the current state of the actionable button;
   - sending, via an output interface of the electronic device, the captured data associated with the retrieved status tag, to a remote server.

A fourth aspect of the invention concerns a system comprising an electronic device according to the third aspect of the invention and a server, the server comprising :
- a server input interface for receiving the captured status data and the associated retrieved status tag;
- a server processor configured for, upon receiving the captured status data and the associated retrieved status tag, setting privacy parameters of the captured status data based on the associated retrieved status tag and managing accessibility of the captured status data based on the privacy parameters.

According to some embodiments, the server further may comprise a server database for storing the captured status data in association with an identifier of the electronic device.

In some embodiments, the server input interface can be further arranged for receiving an access request by a third party server, the access request requesting access to the status data associated with the identifier of the electronic device, and the server processor can be further configured to restrict the access the status data based on the privacy parameters when managing accessibility to the status data.

In complement, the status tags can comprise at least a private mode tag and a sharing mode tag and, when restricting the access to the status data based on the privacy parameters, the processor can be configured to:
- enable the third party server to access the captured status data or publish the captured status data on a user timeline if the associated status tag is the sharing mode tag;
- prevent, for at least one third party server, the access to the captured status data by if the associated status tag is the private mode tag.

Still in complement, when preventing the access to the captured status data to at least one third party server, the server processor can be further configured to delete the captured status data from the server.

The present invention is illustrated by way of example, and not by way of limitation, in the figures of the accompanying drawings, in which like reference numerals refer to similar elements and in which:
- Figure 1 represents a system according to some embodiments of the invention;
- Figure 2 is a flowchart illustrating the steps, performed by an electronic device, of a method according to some embodiments of the invention;
- Figure 3 is a flowchart illustrating the steps, performed by a server, of the method according to some embodiments of the invention;
- Figure 4 illustrates an electronic device according to some embodiments of the invention;
- Figure 5 illustrates a remote server according to some embodiments of the invention.

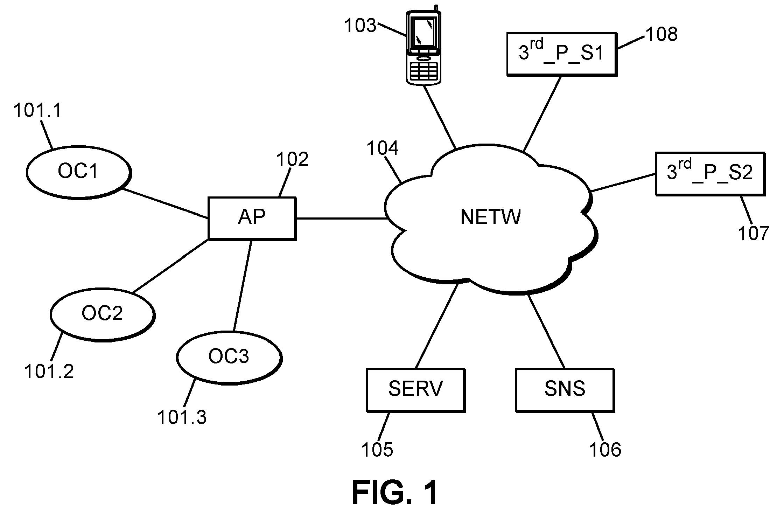

Figure 1 illustrates a system according to some embodiments of the invention.

The system comprises a first electronic device 101.1, a second electronic device 101.2 and a third electronic device 101.3.

According to some embodiments, the electronic devices 101.1-101.3 are connected objects of a given user. For example, the first electronic device 101.1 can be a presence detector, the second electronic device 101.2 can be a weather station and the third electronic device 101.3 can be a connected coffee machine.

In the example shown on Figure 1, the electronic devices 101.1-101.3 access a network 104 (such as the Internet for example) via a common access point 102. No restriction is attached to the communication link between each of the electronic devices 101.1-101.3 and the access point. The communication link can be wired or wireless (Wi-Fi for example).

Via the access point 102, the electronic devices 101.1-101.3 can access a remote server 105, such as a server arranged for receiving status data from electronic devices from a plurality of users. The electronic devices 101.1-101.3 can be optionally registered with the remote server 105 and in association with an identifier of the user to which they belong, and can then transmit status data to the server.

For example, status data can be sent to the remote server 105 on a periodic basis or on an event basis.

The remote server 105 can create a timeline for each given user based on the status data of the electronic devices that are associated to the given user. The user can access the remote server 105 via a user device 103 such as a mobile terminal for example. No restriction is attached to the user device 103, which can be a desktop computer, a laptop, a touch panel, a Personal Digital Assistant PDA, a mobile phone such as a Smartphone, etc.

An application can be installed on the device 103, said application being dedicated to a service enabled by the remote server 105.

In addition, the status data collected by the remote server can be made available to third party servers 107 and 108.

According to other embodiments, the remote server 105 can also publish status data issued by electronic devices of a user, on a social network timeline of the user, the social network timeline being managed a social network server 106.

As detailed hereafter, at least one of the electronic devices 101.1 to 101.3, for example the first electronic device 101.1, comprises a button actionable to switch between at least a first state and a second state, the first and second states being associated with respective status tags in a database of the first electronic device 101.1.

No restriction is associated to the button and to the action used to switch from one state to another. For example, the button might be a physical button with a cursor that can be moved using a mechanical effort by the user. Alternatively, the button might be a touch panel and a state can be selected by the user using a touch input on the touch panel.

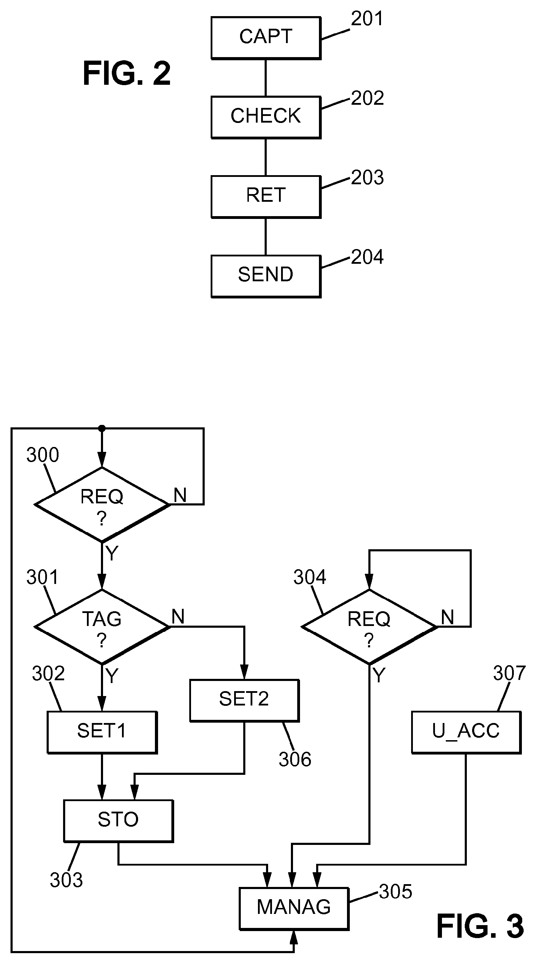

Figure 2 is a flowchart representing steps, performed in an electronic device, of a method according to some embodiments of the invention.

As explained above, the actionable button of the first electronic device can be switch between at least a first state and a second state. According to the invention, the first and second states are associated with respective status tags in a database of the electronic device.

At step 201, the first electronic device 101.1 captures status data. For example, as the electronic device 101.1 is a presence detector, the status data can be the detection of an absence of the user or a detection of a presence of the user. To this end, the status data can be a character string, or can be coded using a bit (as it can have exactly two different values). The status data can also be the absence or presence of a user over a given period, such as *"the user is absent from 10 am to 11am*".

Status data can be captured on a periodic basis. For example, every hour, it is determined whether the user is absent or present. Alternatively, status data can be captured on an event basis : each time a presence of a user is detected, status data indicating the presence is captured.

At step 202, the first electronic device 101.1 checks a current state of the actionable button. For example, the actionable button can be switched between a first state being a *"private"* position and a second state a *"sharing"* position. Additional degrees of privacy can be allowed by enabling more than two states for the actionable button.

At step 203, the first electronic device 101.1 retrieves a status tag from the database, based on the current state of the actionable button. For example, the status tag associated with the *"private"* position can be *"private"* (private mode tag) and the status tag associated with the *"sharing"* position can be *"sharing"* (sharing mode tag).

At step 204, the captured status data associated with the retrieved status tag are sent by the first electronic device 101.1 to the remote server 105.

Figure 3 is a flowchart illustrating steps performed by the remote server 105, of a method according to some embodiments of the invention.

At step 300, it is checked whether status data is received from one of the electronic devices 101.1-101.3 of the user. The remote server 105 can also be in charge of collecting status data issued by other electronic devices of other users.

Upon reception of the status data sent at step 204 by the first electronic device 101.1, it is checked at step 301 whether the status data is associated with a status tag. In the example above, a status tag has been retrieved by the first electronic device 101.1 at step 203.

If the status data is associated with a retrieved status tag, then privacy parameters of the status data are set at step 302, based on the associated retrieved status tag.

For example, setting privacy parameters of the captured data may consist in defining a set of rules (a policy), based on the retrieved status tag. If the status tag is *"privacy",* then the privacy parameters can be :
- no publication on a user timeline;
- no access by third party servers 107 and 108;
- no access by some of the third party server 107 and 108;
- deletion of the status data from the server database and/or;
- other privacy parameters.

On the contrary, in the case where the status tag is *"sharing",* the privacy parameters can be :
- publication on a user timeline managed by the remote server 105 and or on a user timeline managed by the social network server 106;
- access by all the third party servers 107 and 108;
- access by some of the third party servers 107 and 108; and/or
- other privacy parameters.

At step 303, the status data can be stored in a server database of the remote server 205. For example, the status data can be stored in association with the privacy parameters and optionally with an identifier of the first electronic device 101.1 which issued the status data. As a complement, the status data can also be associated with an identifier of the user of the first electronic device 101.1 : this is optional in the case where the server database already stores associations between user identifiers and electronic devices belonging to the identified users.

At step 305, the accessibility of the status data is managed by the remote server 105 based on the privacy parameters. As can be understood from the examples of the privacy parameters above, access to the status data can be restricted, upon receiving of an access request by a third party server at a step 304. For example, if the status tag is the sharing mode tag, at least one third party server may be allowed to access the captured status data, and if the status tag is the private mode tag, at least one third party server is prevented from accessing the captured status data.

Managing accessibility at step 305 may also comprise publishing the status data on a user timeline in case the status tag is the sharing mode tag. In addition, in case the status tag is the private mode tag, the status data can be deleted from the remote server 105 so that it is only stored on the first electronic device 101.1.

The above examples are given for illustrative purposes, and other privacy parameters can be used to manage accessibility of the status data.

In addition, no restriction is attached to the way a third party server can access to status data. As shown above, an access request can be sent to the remote server 101.1, the access request identifying at least one electronic device from which status data is requested. Alternatively, the access request can identify a user so as to retrieve all the status data of all the electronic devices belonging to the identified user.

Alternatively, the status data can be sent by the remote server 105 to the third party server(s) 108 and/or 107, without previously receiving an access request. To this end, the third party server(s) can subscribe to the remote server 105, during a preliminary registration step.

The user can also access the remote server 105, via the user terminal 103 for example, so at to configure the privacy parameters of each of his/her electronic devices 101.1-101.3, at step 307. For example, the user can define new privacy parameters or can modify the privacy parameters that have been set based on the retrieved status tag.

Upon receiving of new status data, for example from the second electronic device 101.2, the steps are repeated from step 300. In the example described above, it can be considered that the second electronic device 101.2 does not comprise a button actionable to switch between at least a first state and a second state associated with status tags. Therefore, at step 301, it is determined that the new status data is not associated with any status tag.

Privacy parameters can however be defined at step 306. According to some embodiments of the invention, predetermined privacy parameters can be associated with the new status data.

According to other embodiments, the first electronic device 101.1 comprising the actionable button can be considered as a master device and can be used by the user to define a general privacy policy that is to be applied to all the electronic devices of the user. In that case, the remote server 105 detects that the new status data is issued from another electronic device of the user (the second electronic device 101.2) and the same privacy parameters than those that have been set for the status data of the first electronic device 101.1, are associated to the new status data of the second electronic device 101.2.

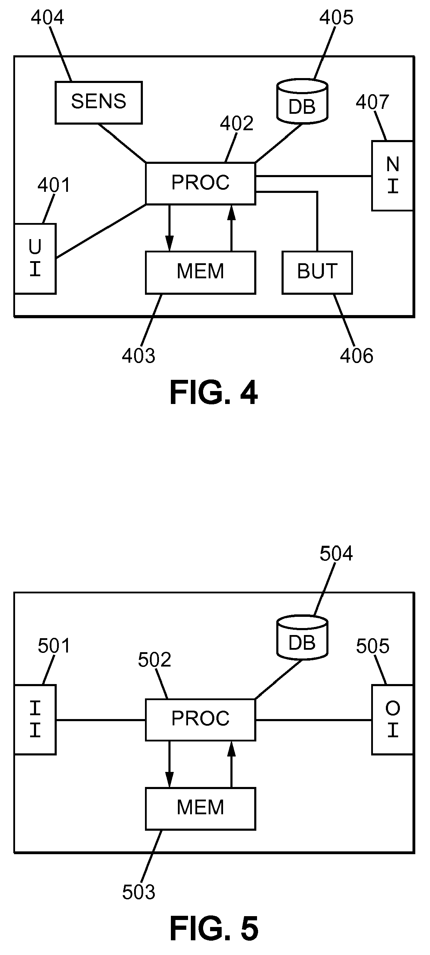

Figure 4 shows an electronic device, such as the first electronic device 101.1, according to some embodiments of the invention.

The first electronic device 101.1 comprises a random access memory 403 and a processor 402 that can store instructions for performing the steps 201 to 204 as described above when referring to figure 2.

The first electronic device 101.1 may also comprise a database 405 for storing data resulting from the method according to the invention. For example, captured status data can be stored in the database, optionally in association with the retrieved status tag.

The first electronic device 101.1 comprises a user interface 401 for receiving user inputs by the user, for example for controlling operations of the first electronic device (for example switching on/off the first electronic device, or modifying operation parameters of the electronic device. The user interface 401 can for example comprise a touch display, a virtual or physical keyboard, press buttons, a camera and/or a microphone coupled to a speech-to-text application. The first electronic device 101.1 also comprises a network interface 407 to communicate with the network 104 via the access point 102 and in particular to transmit the captured status data and the associated retrieved status tags. The network interface can be a wired interface (Ethernet) or wireless (2G, 3G, 4G, Wi-fi, etc).

In addition, as explained above, the first electronic device 101.1 comprises an actionable button 406 that can be switched between at least two states.

The first electronic device 101.1 may comprise a sensor unit 404 for capturing status data.

Figure 5 shows a server, such as the remote server 105, according to some embodiments of the invention.

The remote server 105 comprises a server random access memory 503 and a server processor 502 that can store instructions for performing the steps 300 to 307 as described above when referring to figure 3.

The remote server 105 may also comprise a server database 504 for storing data resulting from the method according to the invention. For example, the captured status data can be stored in the server database 504, in association with the retrieved status tag and/or with the privacy parameters set based on the retrieved status tag, and optionally in association with an identifier of an electronic device and/or an identifier of the user. The server database 504 may further store associations between identifiers of electronic devices and identifiers of user to which the electronic devices belong.

The remote server 105 comprises a server input interface 501 for receiving status data and status tags from electronic devices, for receiving access requests by third party servers, or requests from the user via the user terminal 103. The remote server 105 also comprises an output interface 505 to transmit status data to the third party servers 107 and/or 108 and to the social network server 106.

The input interface 501 and the output interface 505 can be grouped in a single network interface for interfacing the network 104.

## Claims

1. A method of processing status data captured from an electronic device (101.1; 101.2; 101.3), that is to be sent to a remote server (105), the electronic device comprising a button (406) actionable to switch between at least a first state and a second state, said first and second states being associated with respective status tags in a database (405) of the electronic device, the method comprising the following steps carried out by the electronic device:
- upon capturing (201) status data, checking (202) a current state of the actionable button;
- retrieving (203) a status tag from the database, based on the current state of the actionable button; and
- sending (204) the captured status data associated with the retrieved status tag to the remote server.

2. The method according to claim 1, wherein the method further comprises the following steps, carried out by the remote server (105):
- upon receiving (300; 301) the captured status data and the associated retrieved status tag, setting (302) privacy parameters of the captured status data based on the associated retrieved status tag;
- managing (305) accessibility of the captured status data based on the privacy parameters.

3. The method according to claim 2, wherein the method further comprises storing (303), by the remote server, the captured status data in association with an identifier of the electronic device (101.1; 101.2; 101.3).

4. The method according to claim 3, wherein managing (305) accessibility of the captured data comprises, upon receiving of an access request by a third party server (107; 108), said access request requesting access to the status data associated with the identifier of the electronic device (101.1; 101.2; 101.3), restricting the access to the status data based on the privacy parameters.

5. The method according to claim 4, wherein the status tags comprise at least a private mode tag and a sharing mode tag and wherein restricting the access to the status data comprises:
- enabling at least one third party server (107; 108) to access the captured status data or publishing the captured status data on a user timeline, if the associated status tag is the sharing mode tag;
- preventing, for at least one third party server (107; 108), the access to the captured status data by if the associated status tag is the private mode tag.

6. The method according to claim 5, wherein preventing the access to the captured status data comprises deleting the captured status data from the remote server (105).

7. The method according to one of claims 2 to 6, wherein the privacy parameters of the captured status data are configurable by a user.

8. The method according to one of claims 2 to 7, wherein the captured status data of the electronic device is further stored in association with a user identifier, and wherein, upon subsequent reception of new status data from another electronic device (101.1; 101.2; 101.3) associated with the user identifier, privacy parameters of the new status data are set based on the previously retrieved status tag.

9. A computer program product comprising a computer readable medium having stored thereon computer program instructions loadable into a computing device and adapted to - when loaded into and executed by said computing device - cause the computing device to perform a method according to anyone of claims 1 to 8.

10. An electronic device (101.1; 101.2; 101.3) comprising:
- a button (406) actionable to switch between at least a first state and a second state;
- a database (405) associating the first and second states with respective status tags, said tags defined respective levels of privacy;
- a processor (402) configured for:
• capturing status data;
• upon capturing status data, checking a current state of the actionable button;
• retrieving a status tag from the database based on the current state of the actionable button;
• sending, via an output interface (407) of the electronic device, the captured data associated with the retrieved status tag, to a remote server (105).

11. A system comprising the electronic device (101.1; 101.2; 101.3) according to claim 8 and a server (105), said server comprising :
- a server input interface (501) for receiving the captured status data and the associated retrieved status tag;
- a server processor (502) configured for, upon receiving the captured status data and the associated retrieved status tag, setting privacy parameters of the captured status data based on the associated retrieved status tag and managing accessibility of the captured status data based on the privacy parameters.

12. The system according to claim 11, further comprising a server database(504) for storing the captured status data in association with an identifier of the electronic device.

13. The system according to claim 11 or 12, wherein the server input interface (501) is further arranged for receiving an access request by a third party server (107; 108), said access request requesting access to the status data associated with the identifier of the electronic device, and wherein the server processor (502) is further configured to restrict the access the status data based on the privacy parameters when managing accessibility to the status data.

14. The system according to claim 13, wherein the status tags comprise at least a private mode tag and a sharing mode tag and wherein, when restricting the access to the status data based on the privacy parameters, the server processor (502) is configured to:
- enable the third party server (107; 108) to access the captured status data or publish the captured status data on a user timeline if the associated status tag is the sharing mode tag;
- prevent, for at least one third party server (107; 108), the access to the captured status data by if the associated status tag is the private mode tag.

15. The system according to claim 14, wherein, when preventing the access to the captured status data to at least one third party server (107; 108), the server processor is further configured to delete the captured status data from the remote server (105).
